# FASCICULE DE BREVET EUROPEEN

(11) **EP 1 776 485 B1**
(45) Date de publication et mention de la délivrance du brevet: **19.11.2008**
(21) Numéro de dépôt: 05754132.8
(22) Date de dépôt: 21.06.2005
(51) Int. Cl.: C22B 1/24, C22B 7/04, C22B 1/243

(54) **DISPOSITIF MOBILE DE GRANULATION DE FINES DE LAITIER**
FAHRBARE VORRICHTUNG ZUM GRANULIEREN VON STAUBARTIGEN SCHLACKE
MOBILE DEVICE FOR THE GRANULATION OF SLAG FINES

(30) Priorité: 24.06.2004 BE 200400310
(43) Date de publication de la demande: 25.04.2007
(73) Titulaire: S.A. LHOIST RECHERCHE ET DEVELOPPEMENT, 1342 Ottignies-Louvain-La-Neuve (BE)
(72) Inventeur: VAN TICHELEN, Etienne, B-4520 Wanze (BE)
(74) Mandataire: Claeys, Pierre
(86) Numéro de dépôt international: PCT/EP2005/052882
(87) Numéro de publication internationale: WO 2006/000553

(56) Documents cités:
- FR-A- 2 316 342
- RU-C1- 2 139 359
- US-A1- 2003 047 035
- DATABASE WPI Section Ch, Week 200339 Derwent Publications Ltd., London, GB; Class E32, AN 2002-572403 XP002318903 & KR 368 205 B (POHANG IND SCI RES INST) 24 janvier 2003 (2003-01-24)
- DATABASE WPI Section Ch, Week 197809 Derwent Publications Ltd., London, GB; Class M24, AN 1978-16570A XP002318904 & JP 53 005014 A (KOBE STEEL LTD) 18 janvier 1978 (1978-01-18)
- DATABASE WPI Section Ch, Week 199311 Derwent Publications Ltd., London, GB; Class L02, AN 1993-086038 XP002318905 & BR 9 102 138 A (CIMENTO MAUA SA) 5 janvier 1993 (1993-01-05)

## Description

La présente invention se rapporte à un dispositif pour la mise en oeuvre d'un procédé de granulation des fines de laitier, en particulier de fines sidérurgiques et tout particulièrement en vue de leur valorisation.

Une des étapes ultimes de l'élaboration de l'acier est son traitement en poche sous forme liquide, de manière à le purifier, notamment des phases soufrées ou oxydées qui sont concentrées dans le laitier. A cette fin, de la chaux, de la dolomie ou encore des agents fluidifiants (tels que le spath fluor -CaF₂, l'alumine, des aluminates de calcium, etc.) sont ajoutés dans la poche. Cette étape de traitement en poche est appelée "métallurgie secondaire".

De cette métallurgie secondaire, il résulte des déchets appelés déchets de classe 2, lesquels ne constituent pas une nuisance majeure pour l'environnement; ces déchets comprennent par exemple du CaO, du MgO, du SiO₂, de l'Al₂O₃, etc. Ces déchets nécessitent quand même une mise en décharge ou un recyclage. La mise en décharge de nos jours devient de moins en moins possible étant donné les contraintes réglementaires de plus en plus sévères en matière d'environnement. Ce sont particulièrement les fines, particules de taille inférieure à 10 mm, en particulier de taille inférieure à 5 mm, dont l'issue pose un problème.

Lors du recyclage dans un four électrique, une grande partie des fines de laitier (< 5 à 10 mm) est aspirée dans le système d'évacuation des fumées et mélangée aux poussières du four. Les fines de laitier s'enrichissent alors en métaux lourds et en d'autres éléments de classe 1. Ces poussières à teneur élevée en métaux lourds doivent donc être expédiées en décharge de classe 1, ce qui représente un surcoût d'environ 50% par rapport à la mise en décharge de classe 2. Cette option de recyclage est d'autant plus rédhibitoire que l'écart de coût entre la classe 1 et la classe 2 tend à augmenter.

En cas de recyclage via des bandes d'agglomération, bien connues de l'homme de métier, la présence de ces poussières peut servir de germes à l'apparition de dioxines en aval, ce qui condamne souvent cette voie d'élimination des fines.

D'autre part, l'envol important des poussières lors de l'enfournement, dû au courant thermique ascendant, constitue une source de nuisance pour l'environnement et un réel danger pour les opérateurs.

Une solution alternative à la mise en décharge de ces fines de laitiers, respectueuse de l'environnement et de la sécurité des opérateurs, consiste à agglomérer ces poussières de façon à rendre possible leur recyclage dans le procédé sidérurgique et à éviter leur envol au moment de l'enfournement puisque les agglomérats formés sont plus lourds que les poussières. La méthode la plus simple et la moins onéreuse est la granulation, par exemple dans une assiette tournante ou un tambour, comme celui décrit dans FR 2 316 342 ou KR 2002 015904.

L'ajout aux poussières d'une suspension aqueuse à base de produits calco-magnésiens, en présence d'éventuels additifs, favorise la cohésion des granules, lesquels possèdent alors une résistance mécanique suffisante pour prévenir toute émission ultérieure de poussières.

Une usine sidérurgique d'une capacité de 1 000 000 t/an d'acier peut générer environ 6000 t/an de poussières de laitier de métallurgie secondaire, ce qui représente une production horaire inférieure à 1 t de fines. On entend ici par fines ou poussières de laitier, la fraction granulométrique de taille inférieure à 10 mm de ce laitier.

Pour traiter ce faible débit de poussière, on pourrait recourir à une unité de granulation de taille adaptée à ce faible débit, mais celle-ci serait dès lors peu productive et coûteuse en main-d'oeuvre.

Pour réduire ce coût de main-d'oeuvre, on pourrait aussi prévoir une installation de grande taille, mais elle serait utilisée de façon sporadique. Cette solution n'est pas acceptable non plus car l'installation fonctionnera souvent en régime transitoire de démarrage et d'arrêt, les longues périodes d'arrêt étant, de surcroît, préjudiciables au bon fonctionnement du matériel. Le coût d'investissement serait également disproportionné par rapport aux besoins.

Puisque ni une grande installation fonctionnant de façon sporadique ni une petite fonctionnant de manière peu productive et coûteuse ne sont envisageables, le principal problème à résoudre pour le dispositif selon l'invention est donc de procurer une installation dont les coûts de main-d'oeuvre sont faibles, tels ceux d'une grande installation, tout en tournant de manière relativement continue afin de réduire les temps morts de fonctionnement et qui est adaptée aux faibles débits de fines à recycler de l'industrie sidérurgique.

Pour résoudre ce problème, il est prévu suivant l'invention, un dispositif tel qu'indiqué au début comprenant, comme éléments, au moins:
- une trémie d'alimentation (5), recevant les fines,
- des moyens de granulation (2), alimentés en lesdites fines par ladite trémie d'alimentation (5),
- un réservoir de stockage (9) d'une phase aqueuse, contenant au moins un additif de granulation et alimentant lesdits moyens de granulation (2) en ladite phase aqueuse, de façon à produire des granules à partir des fines,
- dés moyens d'évacuation (7) des granules produits,
- une source d'énergie (4), en particulier pour une autonomie de fonctionnement du dispositif, et
- des moyens de contrôle et de commande (3) des éléments susdits,
le dispositif comprenant en outre une plate-forme amovible (1), véhiculable, sur laquelle lesdits éléments sont tous agencés et prêts à être utilisés.

Dès lors, le dispositif selon l'invention permet, par sa mobilité, la mise en oeuvre du procédé de granulation in situ en plusieurs sites métallurgiques différents, afin de valoriser les fines par recyclage en sidérurgie dans des conditions économiquement très compétitives, c'est-à-dire à coût d'investissements opératoires et de transports réduits. En outre le fait de traiter ces fines in situ évite la pollution par envol lors du transport et diminue les risques pour le personnel environnant. Une telle installation mobile, totalement autonome, est capable de se déplacer très facilement et est opérationnelle dès l'arrivée sur site.

Dans la demande de brevet US 2003/0047035, un procédé de récupération de métaux à haute température est mis en oeuvre dans un dispositif mobile. Malheureusement, le dispositif divulgué en partie dans ce document est constitué de plusieurs éléments disposés sur plusieurs plates-formes véhiculables, ce qui nécessite une installation à l'arrivée sur le site. En effet, les différents éléments doivent encore être reliés ensemble pour pouvoir fonctionner, et un tel dispositif demande une grande surface libre sur le site afin de recevoir tous ces équipements, en demandant un temps d'installation qui n'est absolument pas négligeable. L'obligation de l'usage de plusieurs véhicules représente un coût de transport contraignant et la demande en personnel est également proportionnelle au moins au nombre de véhicule. En outre, comme le dispositif est prévu pour être monté à même le sol, cela peut impliquer une installation laborieuse car le sol n'est pas nécessairement plan partout.

Selon l'invention, les éléments du dispositif de granulation étant déjà tous reliés ensemble sur la plate-forme unique, les seules démarches à effectuer in situ ne consistent plus qu'à stabiliser celle-ci, éventuellement à la relier à une source d'alimentation en eau et à programmer les différents paramètres de fonctionnement dans les moyens de contrôle et de commande en fonction, par exemple, de la quantité de matière à traiter, de la taille des granules attendue. La maintenance et l'installation représentent un coût minime, car un seul homme peut s'en charger, le temps d'installation et l'espace nécessaire sont réduits, et le transport est également peu onéreux.

On évite aussi les inconvénients cités ci-dessus, liés à la grande taille d'un équipement de granulation fonctionnel par rapport à la faible production de fines de laitier.Un tel dispositif mobile et autonome offre une grande flexibilité d'utilisation sur le site sidérurgique, soit près de la production de fines de laitier, soit près d'une zone de stockage temporaire ; elle permet aussi de valoriser la production annuelle de fines de plusieurs usines sidérurgiques, sans devoir recourir au transport de ces fines vers un centre de regroupement.

Dans une forme de réalisation particulièrement préférentielle, la plate-forme amovible, véhiculable est un plateau d'une remorque ou semi-remorque standard et tous les éléments du dispositif sont renfermés dans la remorque ou semi-remorque. Par remorque ou semi-remorque standard, on entend suivant l'invention que celle-ci présente des dimensions qui lui permettent de circuler sur route sans être considérée comme transport exceptionnel. Ceci permet au dispositif selon l'invention d'être amené un peu n'importe où sur le site sidérurgique, là où se trouvent les fines à traiter et évite le recours au transport exceptionnel, onéreux et limitatif.

Il a donc fallu maximaliser la taille des équipements et optimaliser leur agencement pour arriver à satisfaire cette contrainte de capacité élevée de fines à traiter dans un espace restreint, par exemple, celui d'une remorque de camion.

En outre, le plateau de la remorque ou semi-remorque peut être au moins partiellement surbaissé. Le plateau surbaissé permet à une plus large gamme d'engins de charger les fines dans la trémie d'alimentation. Pour une capacité de 10 t/h, la taille de la trémie d'alimentation et le diamètre de l'assiette granulatrice exigent le recours à une remorque à plancher surbaissé, par ailleurs plus facile d'accès. Il est évident qu'il est possible de prévoir des installations mobiles de capacité plus faible que 10 t/h. Il est entendu aussi que cet équipement permet également de granuler in situ d'autres types de poussières que les fines de laitiers sidérurgiques.

Suivant une autre forme de réalisation, ladite plate-forme amovible, véhiculable est fixable sur un plateau de remorque ou de semi-remorque. Le dispositif peut aussi être enfermé dans un conteneur de transport de dimension standard, dont le fond forme la plate-forme, ce qui permet un transport de véhicule à véhicule ou d'un véhicule de transport sur le sol aux sites de fonctionnement appropriés.

Dans la forme de réalisation la plus simple, ladite phase aqueuse est une suspension de chaux ou de dolomie, en particulier, un lait de chaux.

Grâce à l'utilisation d'un lait de chaux, les granules de laitier sont recyclables dans un four électrique, à raison d'environ 1 t de granules par charge de four de 150 t, ou en poche, à raison de ± 400 kg par charge de 150 t. Un tel recyclage permet d'éviter l'addition de fondant, notamment de CaF₂, introduit normalement en métallurgie secondaire.

Avantageusement, le dispositif comprend un moyen d'obtention sélective de fines en amont de la trémie d'alimentation en fines, ce moyen de d'obtention sélective de fines peut être un crible, de préférence un tamis vibrant incliné, ou un broyeur. Ce moyen d'obtention sélective de fines sert à uniformiser la taille des fines qui vont pénétrer dans le dispositif de granulation.

La trémie d'alimentation du dispositif selon l'invention est avantageusement équipée d'au moins un système de vibration afin de faciliter l'écoulement des fines alimentées. Par système de vibration, on entend, parmi d'autres, des vibreurs relativement classiques, des systèmes de percussion à air comprimé, des ressorts sur lesquels la trémie pourrait reposer et tout autre système qui garantit un écoulement substantiellement homogène de la matière devant s'écouler au travers de la trémie.

Avantageusement, le dispositif comprend des moyens de contrôle de débit d'alimentation en aval de ladite trémie d'alimentation, ces derniers pouvant comprendre une bande transporteuse à vitesse variable alimentée par la trémie d'alimentation et une guillotine à l'alimentation de ladite bande pour éviter tout blocage.

Dans une forme de réalisation particulièrement avantageuse du dispositif selon l'invention, les moyens de granulation consistent en une assiette granulatrice ou en un tambour. De plus, les moyens de granulation peuvent comprendre une rampe de pulvérisation de la phase aqueuse, telle que la suspension de chaux susmentionnée.

Avantageusement, le réservoir de stockage peut comprendre un mélangeur et/ou une pompe de dosage de ladite suspension de chaux.

D'autres formes de réalisation du dispositif suivant l'invention sont indiquées dans les revendications annexées.

D'autres caractéristiques, détails et avantages de l'invention ressortiront de la description donnée ci-après, à titre non limitatif et en faisant référence aux dessins annexés.

La figure 1 est une vue de haut d'une forme de réalisation du dispositif selon l'invention.

La figure 2 est une vue de profil de la forme de réalisation illustrée à la figure 1.

Sur les figures, les éléments identiques ou analogues portent les mêmes références.

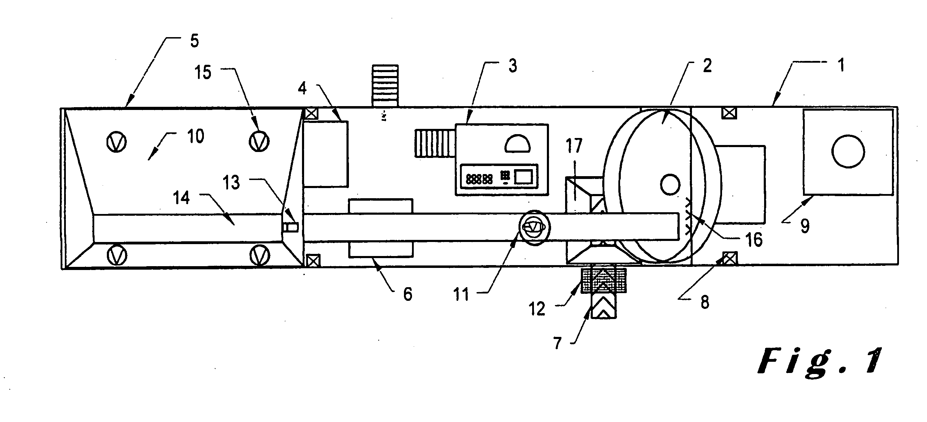

La figure 1 illustre une forme de réalisation du dispositif comprenant un plateau de remorque ou de semi-remorque 1, sur lequel sont agencés les différents éléments du dispositif selon l'invention.

Comme on peut le voir sur les dessins, afin de rendre le dispositif entièrement autonome et totalement mobile, l'ensemble de l'équipement a été choisi et agencé, de manière à tenir sur l'espace d'une remorque de camion de dimensions réglementaires, tout en évitant donc le recours au transport exceptionnel, onéreux et limitatif.

Par ailleurs, une capacité élevée de granulation est attendue par le secteur sidérurgique, pour une telle installation mobile. Un débit de 8 à 10 t/h de fines doit pouvoir être traité.

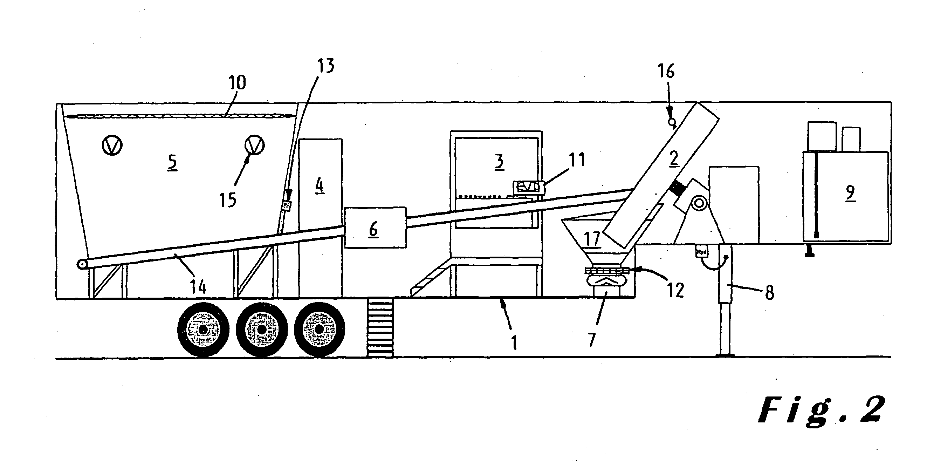

L'unité mobile de granulation selon l'invention est schématisée aux figures 1 et 2. L'ensemble des équipements est disposé sur une remorque à plateau surbaissé 1, équipée de stabilisateurs hydrauliques 8.

Un système d'obtention sélective de fines 10, tel un tamis vibrant incliné, permet d'éviter d'alimenter l'installation avec de trop gros blocs de laitier, de taille supérieure à 20 à 30 mm. Le tamis surmonte une trémie d'alimentation 5 d'environ 10 m³, afin d'avoir l'autonomie suffisante pour traiter ±10 t/h de poussières de laitier.

La trémie 5 à parois inclinées est équipée de plusieurs vibreurs 15, de manière à garantir un écoulement régulier sur la bande transporteuse 14 en aval. En effet, la vitesse de la bande transporteuse ajustée par un variateur de fréquence, permet de régler le débit d'alimentation de l'assiette granulatrice 2. Cela n'est possible que si la bande transporteuse est correctement gavée en produit à traiter. En outre, une guillotine motorisée 13 assure le réglage du débit et prévient tout blocage de l'alimentation de la bande, notamment en présence de blocs de laitier de taille plus importante, passés au travers du crible.

Un système de pesée 6, couplé à la bande, assure le contrôle de l'alimentation en poussières. Par ailleurs, ce système de pesée permet d'identifier les défauts d'alimentation en matière sur la bande et d'agir sur les vibreurs 15 ou la guillotine 13.

L'équipement de granulation est une assiette de ± 2,5 m de diamètre 2, équipée d'une rampe de pulvérisation 16 d'une suspension aqueuse, contenant le ou les additifs solides ou liquides, assurant la granulation des poussières. L'exemple le plus simple de cette suspension est le lait de chaux. L'humidité de la matière à granuler peut être mesurée en continu, notamment par un appareil à infrarouge 11, au-dessus de la bande transporteuse 14.

L'installation comprend un réservoir de stockage 9 de la suspension aqueuse, muni d'un mélangeur, ainsi qu'une pompe de dosage alimentant la rampe de pulvérisation.

Les granulés, typiquement d'une taille de 10 à 20 mm, sont éliminés de l'assiette granulatrice par débordement des particules les plus grosses. Les granulés sont recueillis dans une trémie réceptrice 17, équipée d'une bande transporteuse 7. Cette dernière est avantageusement surmontée d'un système de séchage 12 des granules, par exemple par infrarouge, afin d'en accélérer le durcissement.

L'unité mobile selon l'invention comprend une source d'énergie 4 qui assure une autonomie de fonctionnement du dispositif. Par le terme source d'énergie, on entend un générateur d'énergie ou des moyens permettant de se raccorder à l'énergie de réseau, telle celle produite par le réseau d'électricité. Par générateur d'énergie, on entend, par exemple, un groupe électrogène, possédant ou non un compresseur ou encore tout système capable de transformer l'énergie présente sur les lieux en énergie directement utilisable par le dispositif selon l'invention. Dans l'exemple de forme de réalisation illustré aux figures 1 et 2, l'installation mobile peut être raccordée au réseau électrique ou à son propre groupe électrogène 4 et possède un compresseur. Par ailleurs, elle comprend en son milieu des moyens 3 de contrôle et de commande des équipements. Dans la forme de réalisation illustrée dans ce cadre, les moyens de contrôle et de commande (3) sont regroupés dans une cabine de commande et de contrôle, ce qui permet à un seul homme de suivre, de commander et de pouvoir gérer complètement les divers équipements du dispositif selon l'invention.

Pour la capacité maximale de 10 t/h, la taille de la trémie d'alimentation et le diamètre de l'assiette granulatrice exigent le recours à une remorque à plancher surbaissé, par ailleurs plus facile d'accès. Le plancher surbaissé permet aussi à une plus large gamme d'engins de charger les fines dans la trémie d'alimentation. Il est évident qu'il est possible de prévoir des installations mobiles de capacité plus faible que 10 t/h. Il est entendu aussi que cet équipement permet également de granuler in situ d'autres types de poussières que les fines de laitiers.

Des variantes de certains équipements peuvent être envisagées sans sortir du cadre de la présente invention ; par exemple, l'assiette granulatrice peut être remplacée par un tambour ou le crible initial remplacé par un broyeur, qui évite également la présence de gros blocs de laitier dans l'installation de granulation. Ce dernier équipement pourra même être absent si le laitier est déjà criblé ou broyé en amont. Le réservoir de stockage de suspension aqueuse peut également être remplacé par une unité de fabrication de la suspension au départ de ses matières constitutives.

La disposition des équipements sur la remorque, reprise à la figure 1 peut également être adaptée en fonction du type d'équipements retenus, certains appareillages pouvant éventuellement être ajoutés.

Par ailleurs, des alternatives au dispositif sur remorque de camion peuvent être prises en considération, comme par exemple la disposition dans un conteneur, facilitant le transport de l'installation par voie ferrée, fluviale ou maritime.

### EXEMPLE.-

Des essais de granulation de poussières de laitier de métallurgie secondaire ont été effectués sur site, avec une installation prototype, analogue à celle décrite ci-dessus mais d'une capacité d'environ 1 t/h, comprenant une assiette granulatrice de 1 m de diamètre.

Le laitier est préalablement criblé à 10 mm ; seules les fines sont introduites dans l'installation de granulation, par versage dans une trémie d'alimentation de 0,6 m³. Cette trémie est solidaire d'une bande transporteuse qui véhicule les fines vers l'assiette granulatrice. Celle-ci est inclinée à 55° par rapport à l'horizontale. Au niveau de l'assiette, une rampe de pulvérisation permet d'ajouter du lait de chaux, à raison d'environ 80 dm³ par tonne de fines, pour un lait ayant une teneur en matière solide de l'ordre de 15%.

Des granules de 10 à 25 mm sont ainsi fabriqués ; ils sont collectés par débordement de l'assiette granulatrice sur une bande transporteuse et acheminés jusqu'au stockage en "big bags", où ils ont été conservés durant un mois. Cent tonnes de fines de laitier ont ainsi été granulées, pour réaliser l'essai de recyclage.

La résistance mécanique des granules a été mesurée au terme du stockage, avant leur utilisation. Sur chaque échantillon, un test de résistance à l'écrasement est effectué sur 10 granules de taille moyenne proche de 10 mm : il s'agit de mesurer la force correspondant à la rupture du granule. Les valeurs de résistance à l'écrasement sont de l'ordre de 60 à 90 N.

De telles résistances à l'écrasement permettent notamment de stocker les granules, ayant une densité en vrac d'environ 1 kg/dm³, en lit d'au moins 10 m de haut dans un silo vertical, sans risque d'écrasement de la couche inférieure. D'autre part, une telle résistance mécanique permet la manipulation et le recyclage des granules en limitant l'émission de poussières.

Ces granules de laitier ont été recyclés sans émission de poussières dans le four électrique et en métallurgie secondaire. Dans le four électrique, 1 t de granules a été recyclée par charge de four de 150 t. En poche, 350 à 400 kg de granules ont été ajoutés par charge de 150 t. Dans ce dernier cas, il faut signaler que le recyclage permet d'éviter l'addition de CaF₂, introduit normalement en métallurgie secondaire comme fondant.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Dispositif de traitement de fines de laitier comprenant comme éléments, au moins :
- une trémie d'alimentation (5), recevant les fines,
- des moyens d'évacuation (7) de produit,
- une plate-forme amovible (1), véhiculable,
**caractérisé en ce que** le dispositif de traitement est un dispositif pour la mise en oeuvre d'un procédé de granulation de fines de laitier, **en ce qu'**il comprend en outre
- des moyens de granulation (2), alimentés en lesdites fines par ladite trémie d'alimentation (5),
- un réservoir de stockage (9) d'une phase aqueuse, contenant au moins un additif de granulation et alimentant lesdits moyens de granulation (2) en ladite phase aqueuse, de façon à produire des granules à partir des fines, lesdits moyens d'évacuation (7) de produit étant des moyens d'évacuation (7) des granules produits,
- une source d'énergie (4), en particulier pour une autonomie de fonctionnement du dispositif, et
- des moyens de contrôle et de commande (3) des éléments susdits et **en ce que** les éléments sont tous agencés et prêts à être utilisés sur ladite plate-forme amovible (1), véhiculable.

2. Dispositif selon la revendication 1 **caractérisé en ce qu'**il comprend en outre, en amont de la trémie d'alimentation (5), un moyen d'obtention sélective (10) desdites fines à partir dudit laitier alimenté à ce moyen d'obtention sélective.

3. Dispositif selon l'une des revendications 1 ou 2 **caractérisé en ce** ladite phase aqueuse est une suspension de chaux ou de dolomie, en particulier, un lait de chaux.

4. Dispositif selon l'une des revendications 1 à 3 **caractérisé en ce que** ladite plate-forme amovible (1), véhiculable, est un plateau d'une remorque ou semi-remorque standard et **en ce que** tous les éléments du dispositif sont renfermés dans la remorque ou semi-remorque.

5. Dispositif selon la revendication 4, **caractérisé en ce que** ledit plateau (1) est au moins partiellement surbaissé.

6. Dispositif selon l'une des revendications 1 à 3, **caractérisé en ce que** ladite plate-forme amovible (1), véhiculable est fixable sur un plateau de remorque ou de semi-remorque.

7. Dispositif selon l'une des revendications 1 à 6 **caractérisé en ce qu'**il comprend des moyens de contrôle de débit d'alimentation en aval de ladite trémie d'alimentation.

8. Dispositif selon l'une des revendications 2 à 7 **caractérisé en ce que** le moyen d'obtention sélective (10) est un crible, de préférence un tamis vibrant incliné.

9. Dispositif selon l'une des revendications 2 à 7 **caractérisé en ce que** le moyen d'obtention sélective (10) est un broyeur.

10. Dispositif selon l'une des revendications 1 à 9 **caractérisé en ce que** la trémie d'alimentation (5) est équipée d'au moins un système de vibration (15).

11. Dispositif selon la revendication 7, **caractérisé en ce que** les moyens de contrôle de débit d'alimentation en aval de ladite trémie d'alimentation comprennent une bande transporteuse (14) à vitesse variable, alimentée par ladite trémie d'alimentation (5) et une guillotine (13) à l'alimentation de ladite bande pour éviter tout blocage.

12. Dispositif selon l'une des revendications 1 à 11
**caractérisé en ce que** les moyens de granulation (2) consistent en une assiette granulatrice.

13. Dispositif selon l'une des revendications 1 à 11,
**caractérisé en ce que** les moyens de granulation (2) consistent en un tambour.

14. Dispositif selon l'une des revendications 1 à 13,
**caractérisé en ce que** les moyens de granulation (2) comprennent une rampe de pulvérisation (16) de ladite phase aqueuse.

15. Dispositif selon l'une des revendications 1 à 14,
**caractérisé en ce que** le réservoir de stockage (9) comprend un mélangeur et/ou une pompe de dosage de ladite phase aqueuse.

## Claims

1. Device for treating slag fines comprising, as components, at least:
- a feed hoper (5) receiving the fines,
- means (7) of discharging product,
- a removable conveyable platform (1)
**characterized in that** said device for treating slag fines is a device for implementing a method of granulating slag fines, **in that** it further comprises
- granulation means (2) supplied with the said fines through the said feed hopper (5),
- a storage reservoir (9) for an aqueous phase, containing at least one granulation additive and supplying the said granulation means (2) with the said aqueous phase, so as to produce granules from the fines, said means (7) for discharging product being means of discharging (7) the granules produced,
- an energy source (4), in particular for the device to be self-sufficient in operation, and
- means (3) of monitoring and controlling the above-mentioned components,
and **in that** the said elements are all arranged and ready to be used on said removable conveyable platform (1).

2. Device according to claim 1, **characterized in that** it also comprises, upstream of the feed hopper (5), a means (10) for the selective obtaining of the said fines from the said slag fed to this selective obtaining means.

3. Device according to one of claims 1 or 2, **characterized in that** the said aqueous phase is a suspension of lime or dolomite, in particular a lime slurry.

4. Device according to one of claims 1 to 3, **characterized in that** the said conveyable removable platform (1) is a bed of a standard trailer or semitrailer and **in that** all the components of the device are contained in the trailer or semitrailer.

5. Device according to claim 4, **characterized in that** the said bed (1) is at least partially lowered.

6. Device according to one of claims 1 to 3, **characterized in that** the said conveyable removable platform (1) can be fixed to a trailer or semitrailer bed.

7. Device according to one of claims 1 to 6, **characterized in that** it comprises means of controlling the feed rate downstream of the said feed hopper.

8. Device according to one of claims 2 to 7, **characterized in that** the selective obtaining means (10) is a screen, preferable an inclined vibrating sieve.

9. Device according to one of claims 2 to 7, **characterized in that** the selective obtaining means (10) is a crusher.

10. Device according to one of claims 1 to 9, **characterized in that** feed hopper (5) is equipped with at least one vibration system (15).

11. Device according to claim 7, **characterized in that** the means of controlling the feed rate downstream of the said feed hopper comprise a variable-speed conveyor belt (14) fed by the said feed hoper (5) and a guillotine (13) at the feed to the said belt in order to prevent any blockage.

12. Device according to one of claims 1 to 11, **characterized in that** the granulation means (2) consist of a granulating dish.

13. Device according to one of claims 1 to 11, **characterized in that** the granulation means (2) consist of a drum.

14. Device according to one of claims 1 to 13, **characterized in that** the granulation means (2) comprise an atomisation unit (16) for the said aqueous phase.

15. Device according to one of claims 1 to 14, **characterized in that** the storage reservoir (9) comprises a mixer and/or a pump for dosing out the said aqueous phase.

## Patentansprüche

1. Verarbeitungsvorrichtung für Schlackestaub, die als Elemente mindestens folgende aufweist:
- einen Zuführbunker (5), der den Staub aufnimmt,
- Produktentleerungsmittel (7),
- eine fahrbare abnehmbare Plattform (1),
**dadurch gekennzeichnet, dass** die Verarbeitungsvorrichtung eine Vorrichtung zum Umsetzen eines Granulierungsverfahrens für Schlackestaub ist, und dass sie ferner Folgendes aufweist
- Granulierungsmittel (2), die mit dem Staub über den Zuführbunker (5) versorgt werden,
- einen Lagerbehälter (9) mit einer wässrigen Phase, der mindestens einen Granulierungszusatz enthält und die Granulierungsmittel (2) mit der wässrigen Phase versorgt, so dass aus dem Staub Körnchen erzeugt werden, wobei die Produktentleerungsmittel (7) Entleerungsmittel (7) für die erzeugten Körnchen sind,
- eine Energiequelle (4), insbesondere für eine Betriebsautonomie der Vorrichtung, und
- Steuer- und Bedienmittel (3) der oben genannten Elemente, und dass die Elemente alle eingerichtet und für den Einsatz auf der abnehmbaren fahrbaren Plattform (1) bereit eingerichtet sind.

2. Vorrichtung nach Anspruch 1, **dadurch gekennzeichnet, dass** sie ferner stromaufwärts des Zuführbunkers (5) ein Mittel zum selektiven Erzielen (10) des Staubs ausgehend von der Schlacke, die zu diesem Mittel zum selektiven Erzielen zugeführt wird, aufweist.

3. Vorrichtung nach einem der Ansprüche 1 oder 2, **dadurch gekennzeichnet, dass** diese wässrige Phase eine Kalk- oder Dolomitsuspension ist, insbesondere eine Kalkmilch.

4. Vorrichtung nach einem der Ansprüche 1 bis 3, **dadurch gekennzeichnet, dass** die abnehmbare fahrbare Plattform (1) eine Platte eines Anhängers oder Standardaufliegers ist, und dass alle Elemente der Vorrichtung in dem Anhänger oder Auflieger eingeschlossen sind.

5. Vorrichtung nach Anspruch 4, **dadurch gekennzeichnet, dass** die Platte (1) mindestens teilweise eine Niederrahmenplatte ist.

6. Vorrichtung nach einem der Ansprüche 1 bis 3, **dadurch gekennzeichnet, dass** die abnehmbare fahrbare Platte (1) auf einer Anhänger- oder Aufliegerplatte befestigt werden kann.

7. Vorrichtung nach einem der Ansprüche 1 bis 6, **dadurch gekennzeichnet, dass** sie Mittel zum Steuern des Zuführdurchflusses stromabwärts des Zuführbunkers aufweist.

8. Vorrichtung nach einem der Ansprüche 2 bis 7, **dadurch gekennzeichnet, dass** das Mittel zum selektiven Erzielen (10) ein Sieb ist, vorzugsweise ein schräges Rüttelsieb.

9. Vorrichtung nach einem der Ansprüche 2 bis 7, **dadurch gekennzeichnet, dass** das Mittel zum selektiven Erzielen (10) ein Zerkleinerer ist.

10. Vorrichtung nach einem der Ansprüche 1 bis 9, **dadurch gekennzeichnet, dass** der Zuführbunker (5) mit mindestens einem Rüttelsystem (15) ausgestattet ist.

11. Vorrichtung nach Anspruch 7, **dadurch gekennzeichnet, dass** die Mittel zum Steuern des Zuführdurchflusses stromabwärts des Zuführbunkers ein Förderband (14) mit variabler Geschwindigkeit aufweisen, das von dem Zuführbunker (5) versorgt wird, und einen Schieber (13) an der Versorgung des Förderbands, um jedes Blockieren zu vermeiden.

12. Vorrichtung nach einem der Ansprüche 1 bis 11, **dadurch gekennzeichnet, dass** die Granulierungsmittel (2) aus einem Granulierungsteller bestehen.

13. Vorrichtung nach einem der Ansprüche 1 bis 11, **dadurch gekennzeichnet, dass** die Granulierungsmittel (2) aus einer Trommel bestehen.

14. Vorrichtung nach einem der Ansprüche 1 bis 13, **dadurch gekennzeichnet, dass** die Granulierungsmittel (2) eine Sprührampe (16) der wässrigen Phase aufweisen.

15. Vorrichtung nach einem der Ansprüche 1 bis 14, **dadurch gekennzeichnet, dass** der Lagerbehälter (9) einen Mischer und/oder eine Dosierpumpe der wässrigen Lösung aufweist.
